# EUROPEAN PATENT SPECIFICATION

(11) **EP 3 048 683 B1**
(45) Date of publication and mention of the grant of the patent: **26.07.2017**
(21) Application number: 16150387.5
(22) Date of filing: 07.01.2016
(51) Int. Cl.: H02G 3/04

(54) **CABLE TRAY**
KABELTRASSE
CHEMIN DE CÂBLES

(30) Priority: 21.01.2015 DK 201570030
(43) Date of publication of application: 27.07.2016
(73) Proprietor: Siltec A/S, 8600 Silkeborg (DK)
(72) Inventor: Gasbjerg, Frank Hviid, 8660 Skanderborg (DK)
(74) Representative: Nielsen, Leif

(56) References cited:
- US-A- 2 199 152
- US-A- 2 465 074
- US-A1- 2001 009 192

## Description

### Field of the Invention

The present invention concerns a hose and/or cable tray for carrying cables and hoses and of the type made of wire material with U-bent wires and longitudinal wires fastened thereto at the bottom and the sides.

### Background of the Invention

Cable and hose trays are rectangular modules comprising a bottom and two side walls at the longitudinal sides of the bottom. The planes of the side walls are normally substantially at right angles to the plane of the bottom, but other angles between bottom and side walls are, however, possible as well.

It is known with cable trays made of wire material with U-bent wires and longitudinal wires fastened thereto at the bottom and the sides.

Hose and cable trays (in the following called cable trays) are typically used for fastening cables, pipes and/or hoses (hereinafter called cables) in buildings, and mounted on the base by means of fittings, brackets or similar (in the following called brackets) that are fastened to the base and most often with several cable or hose trays in continuation of each other.

The cables can either be laid loosely in the cable trays, or they can be fastened to the cable tray by common fastening means, e.g. fittings, cable ties or similar means for cables, hoses and/or tubes. In cable trays of wire it is therefore easy to fasten the cables with suitable spacing at selected wires in the cable tray.

When the cable tray is mounted in vertical position, it is normally necessary to fasten the cables to the tray in order to ensure that they remain in the cable tray.

The base is e.g. a ceiling or a wall in a building. By mounting on a horizontal ceiling, the bottom of the cable trays will be substantially parallel with the plane of the ceiling, i.e. horizontal. By mounting on a wall, the bottom of the cable trays will run substantially in parallel with the plane of the wall. This means that the cable trays are mounted horizontally by horizontal ceilings, vertically by vertical walls or inclining at inclining walls or ceilings.

A cable tray is e.g. described in GB 2356741 A. Herein is disclosed a cable tray of wire material where the cable tray has a bottom and sides. The cable tray is provided with a zigzag bent wire along the sides. US2001/009192 discloses a tray according to the preamble of claim 1. A similar cable tray is disclosed in US 2001/0009192 A where a zigzag bent wire may be provided at the upper edge of at least one of the sides of the cable tray.

The prior art cable trays of wire have, however, the disadvantage that they are not sufficiently dimensionally stable and tend to be deformed if the weight of cables, tubes and/or hoses is high such that a deflection and/or sagging of the cable tray between the brackets occurs.

### Object of the Invention

It is thus the object of the invention to provide cable trays that are dimensionally stable whereby deflection and/or sagging is eliminated or at least substantially reduced.

Also, it is the object of the invention to provide cable trays where the desired dimensional stability can be achieved by reduced wire thickness.

Finally, it is the object of the invention to provide a cable tray which is easy to clean such that possible dropping of particles, e.g. dust from the cable trays, can be eliminated or at least substantially reduced.

### Description of the Invention

These objects of the invention are achieved by the features of claim 1. The cable tray according to the invention is peculiar in that the bottom of the tray is reinforced by means of the bottom comprising at least one zigzag bent wire.

Hereby is achieved a dimensionally stable sandwich construction where the wires of the at least three wire layers extend in different directions in the layers. This ensures ample dimensionally stability of the cable tray and eliminates or at least reduces deformation of the cable tray by deflection and/or sagging under a given gravitational load.

The width of the cable tray is determined by the spacing between the vertical sides on the U-bent wires. For very narrow cable trays, the number of longitudinal wires in the cable tray can be at least two, increasing with the width of the cable tray such that a wide cable tray will typically have more longitudinal wires than a narrow cable tray. Large spacing between the side walls in the cable trays, i.e. wide cable trays, entail increased tendency of deflection and/or sagging, particularly of the bottom. The deflection and/or sagging can expediently be avoided by the sandwich construction at the bottom of the cable tray according to the invention.

Furthermore, it will be possible to increase the spacing between fittings, brackets or similar (in the following only called brackets) by which the cable tray is to be fastened to the base, without causing any increased deflection or sagging of the cable tray between the brackets. The spacing between the brackets can e.g. be increased from a spacing of 2 m to 3 m without increasing deflection or sagging of the cable trays. The consumption of time and materials by mounting the cable trays is thereby reduced, thereby providing reduced total costs of installation.

This reinforced sandwich construction will also enable achieving a desired dimensional stability by a desired gravitational load on the cable tray, and at the same time making the cable tray of wire with reduced diameter. The costs of material and the production costs are thereby reduced.

The cable tray is normally made of metal wires, including particularly corrosion-proof materials of e.g. steel, steel alloys such as AISI 316 or 304, and/or hot- or electrogalvanised steel, aluminium, aluminium alloys, or similar cleaning-friendly materials. Cleaning-friendly cable trays are achieved thereby, and since the cable trays are made of wire it is also possible to clean the cables mounted in the trays without needing to disassemble the cable trays. It is thereby possible to use the cable trays in conditions where frequent cleaning is required, e.g. due to official requirements such as in pharmaceutical industry and food industry, including slaughterhouses.

The wires in the cable tray are soldered or welded together in the points of contact where two wires are crossing each other. However, it is also possible to make the cable tray of wires of dimensionally stable plastic which is welded or glued together.

The wire thickness is typically 2-24 mm depending on the size of the cable tray and desired load capacity for the cable tray and thereby the weight to be carried by the cable tray.

The reinforced sandwich construction of the cable tray and the many joints between the wires in the various wire layers ensure a sandwich construction with great dimensional stability, where deflection and/or sagging of the cable tray is avoided or at least substantially reduced.

It is preferred that the at least one zigzag bent wire of the cable tray is bent such that the bends are located between one of the longitudinal side edges of the bottom and the closest lying longitudinal wire in the bottom of the cable tray. The obliquely disposed wire parts between the bends on the zigzag bent wire thereby extend substantially between the two side edges of the wire tray. This ensures dimensional stability across the whole width of the cable tray and contributes to preventing the said deflection and/or sagging, in particular when the cable tray is suspended between mounting brackets and loaded with the weight of tubes, cables and/or hoses.

It is preferred that the longitudinal wires in the bottom of the cable tray are provided at the outer side of the U-bent wires. Alternatively, the longitudinal wires in the bottom of the cable tray are provided at the inner side of the U-bent wires. The at least one zigzag bent wire is fastened to the longitudinal wires at the opposite side thereof relative to the U-bent wires. In this way appears the above mentioned sandwich construction around the longitudinal wires which thereby is secured against the said deflection and/or sagging when the cable tray is suspended and loaded with the weight of cables, tubes, hoses etc.

In a variant of the cable tray, the zigzag bent wire is provided relative to the longitudinal wires such that an opening is formed between the bends and the longitudinal wire situated closest to the bend. This ensures a very cleaning-friendly design of the cable tray, where all surfaces of the wire structure can easily be cleaned because no pockets appear in the construction where liquids, dirt, dust and similar fluid and/or particulate matter can gather. Dropping of this kind of materials from overhead and/or wall mounted cable trays can thereby be eliminated by regular cleaning, or at least be reduced substantially.

The cable trays may also be designed with a safeguard that keeps cables, tubes and/or hoses in the tray such that they are freely accessible for cleaning while at the same time retained inside the cable tray. The safeguard is e.g. formed in that the U-bent wires at each their end have a leg extending substantially in parallel with the plane at the bottom of the cable tray. These legs are turned towards one end edge along one side of the cable tray and towards the other end edge along the other side. Along each side of the cable tray, the legs are therefore turned towards each their end edge of the wire tray. This safeguard allows cables and/or tubes to be laid down into the tray in an easy way and such that they do not fall out of the tray during cleaning, e.g. if they are flushed with a water jet e.g. from a high-pressure cleaner.

### Description of the Drawing

The invention will now be explained below with reference to the drawing, where:
- Fig. 1: is a bottom view of a cable tray according to the invention;
- Fig. 2: is a perspective view from above of a cable tray according to the invention;
- Fig. 3: is a side view of a cable tray according to the invention;

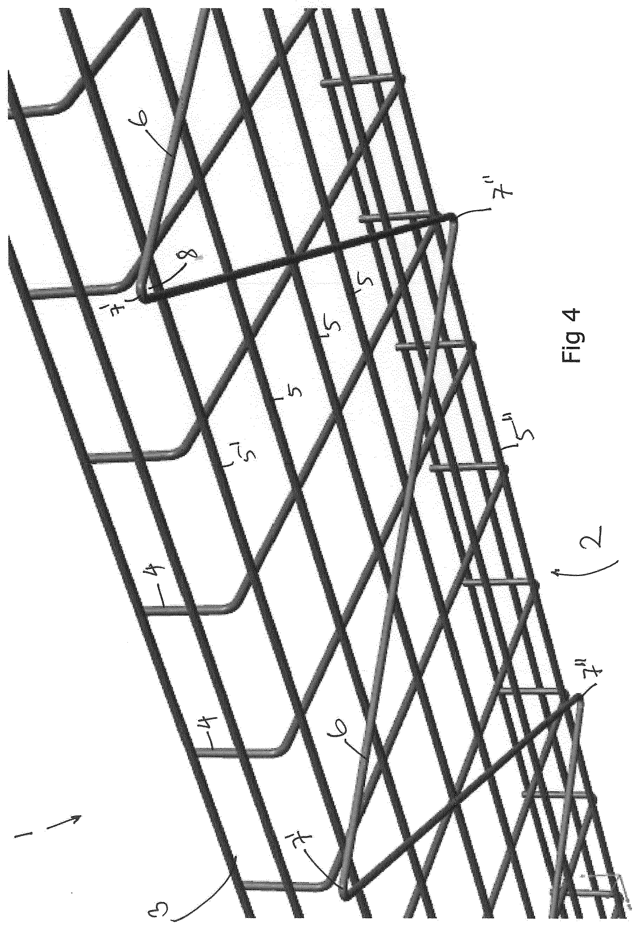

- Fig. 4: is a perspective view from below of a cable tray according to the invention;
- Fig. 5: shows a variant of the cable tray with a safeguard for cables and/or hoses;
- Figs. 6a-6d: illustrates sagging of prior art cable trays with insufficient dimensional stability.

### Detailed Description of Embodiments of the Invention

When hoses, tubes, electric cables and/or data cables are fitted in a building, it is known to use a cable tray 1 for the purpose. These are fastened to brackets 11 mounted under a ceiling or on a wall, i.e. typically in a horizontal, vertical or possibly inclining position, the latter under inclining ceilings or walls.

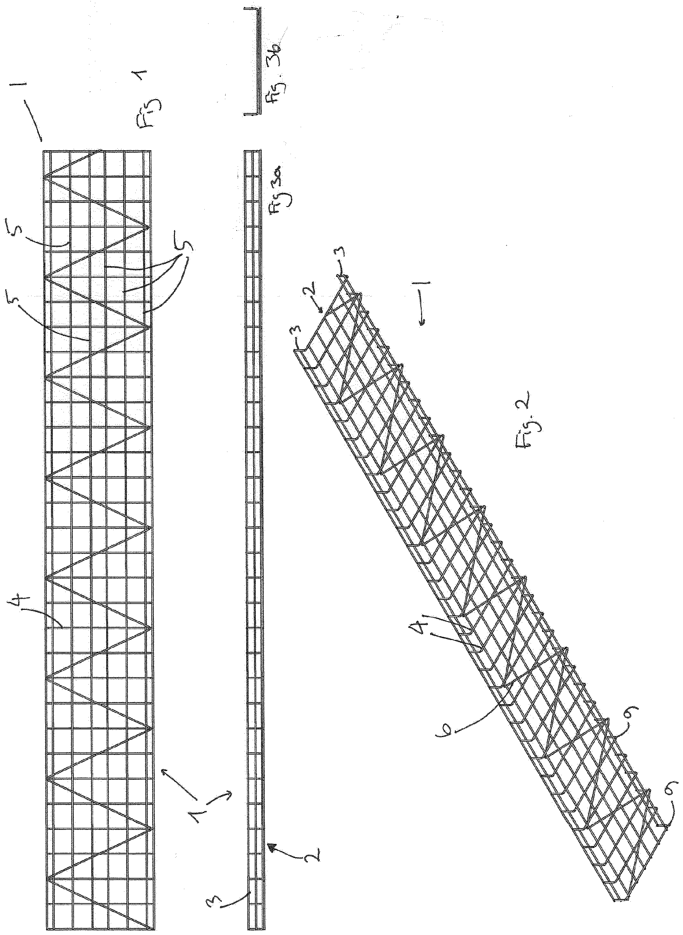

Fig. 2 shows a cable tray 1 according to the invention in perspective view made of wire material. The cable tray 1 has a bottom 2 and two sides 3. The sides are typically at right angles to the bottom 2.

The cable tray 1 is made of wire material, with U-bent wires 4 and longitudinal wires 5 fastened thereto at the bottom and the sides of the U-bent wires 4. In order to reinforce the structure of the cable tray 1, the bottom 2 is reinforced by addition of at least one zigzag bent wire 6.

The at least one zigzag bent wire 6 is bent such that the bends 7', 7" are located between one of the longitudinal side edges 9 of the bottom 2 and the closest lying longitudinal wire 5', 5" in the bottom 2 of the cable tray.

The longitudinal wires 5 in the bottom 2 of the cable tray are preferably provided at the outer side of the U-bent wires 4. Alternatively, the longitudinal wires 5 in the bottom 2 of the cable tray are provided at the inner side of the U-bent wires.

The at least one zigzag bent wire 6 is fastened to the longitudinal wires 5 at the opposite side thereof relative to the U-bent wires 4. Hereby appears the above mentioned sandwich structure that reinforces the cable tray 1 such that deflection and/or sagging is avoided or substantially reduced.

The zigzag bent wire 6 is preferably provided relative to the longitudinal wires 5 such that an opening 8 is formed between the bends 7', 7"and the longitudinal wire 5', 5" situated closest to the bend such that no areas in the structure appear where water, liquids, dust, dirt and/or other matter can gather and which cannot be easily removed by cleaning, e.g. by flushing with a water jet, such as by using a high-pressure cleaner or similar cleaning equipment.

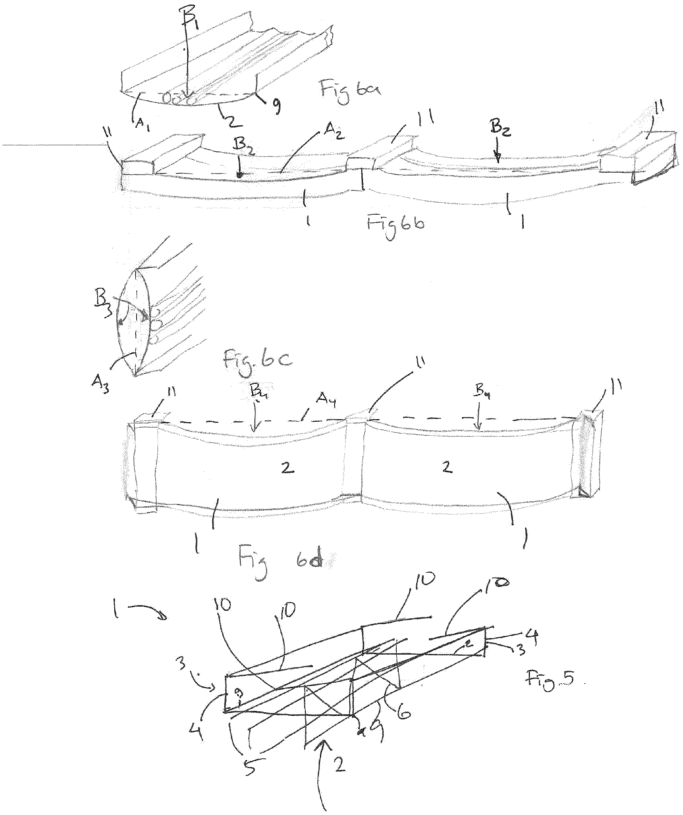

The cable tray is possibly equipped with securing means in the form of safeguard 10 ensuring that hoses and/or cables cannot fall out of the tray, see Fig. 5. The safeguard is e.g. provided in that the U-bent wires 4 at each their end of the sides 3 have a leg extending substantially in parallel with a plane coextensive with the bottom 2 of the cable tray. The legs at each side 3 of the cable tray 1 are turned towards each their end edge of the cable tray as the legs along one side 3 are turned towards one end edge and the legs 10 along the other side 3 are turned towards the other end edge. This safeguard 10 allows easy laying of cables and/or tubes into the tray without use of tools, and so that it is not necessary to fasten hoses and/or cables with additional means, e.g. clamps, fittings or cable ties. The safeguard 10 prevents hoses and/or cables from falling out of the cable tray 1 during cleaning, e.g. if they are flushed with a water jet from e.g. a high-pressure cleaner.

By deflection is meant deformation of bottom and possibly sides of prior art cable trays due to the gravitational load of cables, tubes and/or hoses provided in the cable tray, which is illustrated in Figs. 6a-6d. A1-A4 refer to the original shape of the cable tray 1 where no deflection or sagging occurs.

The deflection may be more apparent in a cross-section through the tray, see Fig. 6a, where a part of the bottom 2, e.g. the centre, flexes downward in relation to an unloaded cable tray 1 as illustrated by the broken line A. It appears in Fig. 6a that the centre of the bottom 2 sags along a longitudinal centre line of the cable tray 1 so that the centre is below the edge 9 between the side wall and the bottom (see Fig. 6a). The broken line A1 indicates the position of the bottom in a tray without load and sagging, and the arrow B1 indicates the sagging of the bottom of the cable tray.

Sagging of the entire cable tray 1 may also occur between two brackets 11 that are applied for mounting the cable tray 1 at a wall or under a ceiling, see Figs. 6b and 6d. The broken line A1, A4 here refers to the shape of the cable tray in undeformed condition, and the arrows B2, B4 indicate the sagging of the cable tray between the two brackets 11.

Deflection will most often occur when the cable tray is mounted so that the bottom 2 is vertical, see Fig. 6c. In such cases, the weight of cables, tubes and/or hoses (not shown) fastened to the bottom 2 of a traditional cable tray, e.g. by traditional cable ties (not shown), will be a load on the bottom so that the bottom 2 is deflected to one side, as illustrated by the arrows B3, as seen in relation to a vertically unloaded bottom which is illustrated by the broken line A3.

## Claims

1. A hose and/or cable tray (1) for carrying cables and hoses and of the type made of wire material with U-bent wires (4) which define a bottom (2) and sides (3) of the hose and/or cable tray, respectively, and longitudinal wires fastened thereto at the bottom and the sides, **characterised in that** the bottom (2) of the tray is reinforced by means of the bottom (2) comprising at least one zigzag bent wire (6).

2. A hose and/or cable tray according to claim 1, **characterised in that** the at least one zigzag bent wire (6) is bent such that the bends (7) are located between one of the longitudinal side edges of the bottom and the closest lying longitudinal wire in the bottom (2) of the cable tray.

3. A hose and/or cable tray according to claim 1 or 2, **characterised in that** the longitudinal wires (5) in the bottom (2) of the cable tray are provided at the outer side of the U-bent wires (4).

4. A hose and/or cable tray according to claim 1 or 2, **characterised in that** the longitudinal wires (5) in the bottom (2) of the cable tray are provided at the inner side of the U-bent wires (4).

5. A hose and/or cable tray according to claim 3 or 4, **characterised in that** the at least one zigzag bent wire (6) is fastened to the longitudinal wires (5) at the opposite side thereof relative to the U-bent wires (4).

6. A hose and/or cable tray according to any preceding claim, **characterised in that** the zigzag bent wire (6) is provided relative to the longitudinal wires (5) such that an opening (8) is formed between the bends (7', 7") and the longitudinal wire (5', 5") lying closest to the bend.

7. A hose and/or cable tray according to any preceding claim, **characterised in that** the tray (1) is equipped with securing means (10) safeguarding that hoses and/or cables cannot fall out of the tray.

## Patentansprüche

1. Schlauch- und/oder Kabeltrasse (1) zum Tragen von Kabeln und Schläuchen und von dem Typ, der aus einem Drahtmaterial mit U-gebogenen Drähten (4) hergestellt ist, die einen Boden (2) bzw. Seiten (3) der Schlauch- und/oder Kabeltrasse definieren, sowie aus am Boden und an den Seiten dazu befestigten Längsdrähten, **dadurch gekennzeichnet, dass** der Boden (2) der Trasse mittels mindestens eines zickzackgebogenen Drahtes (6) verstärkt ist.

2. Schlauch- und/oder Kabeltrasse nach Anspruch 1, **dadurch gekennzeichnet, dass** der mindestens eine zickzackgebogene Draht (6) derart gebogen ist, dass die Biegungen (7) zwischen einer der Längsseitenränder des Bodens und dem nächstliegenden Längsdraht im Boden (2) der Kabeltrasse vorgesehen sind.

3. Schlauch- und/oder Kabeltrasse nach Anspruch 1 oder 2, **dadurch gekennzeichnet, dass** die Längsdrähte (5) im Boden (2) der Kabeltrasse an der Außenseite der U-gebogenen Drähte (4) angeordnet sind.

4. Schlauch- und/oder Kabeltrasse nach Anspruch 1 oder 2, **dadurch gekennzeichnet, dass** die Längsdrähte (5) im Boden (2) der Kabeltrasse an der Innenseite der U-gebogenen Drähte (4) angeordnet sind.

5. Schlauch- und/oder Kabeltrasse nach Anspruch 3 oder 4, **dadurch gekennzeichnet, dass** der mindestens eine zickzackgebogene Draht (6) an den längs verlaufenden Drähten (5) an ihrer gegenüberliegenden Seite relativ zu den U-gebogenen Drähten (4) befestigt ist.

6. Schlauch- und/oder Kabeltrasse nach irgendeinem der vorhergehenden Ansprüche, **dadurch gekennzeichnet, dass** der zickzackgebogene Draht (6) relativ zu den Längsdrähten (5) derart angeordnet ist, dass zwischen den Biegungen (7', 7") und dem der Biegung nächstliegenden Längsdraht (5', 5") eine Öffnung (8) entsteht.

7. Schlauch- und/oder Kabeltrasse nach irgendeinem der vorhergehenden Ansprüche, **dadurch gekennzeichnet, dass** die Trasse (1) Sicherungsmittel (10) aufweist, die sicherstellen, dass die Schläuche und/oder Kabel nicht aus der Trasse herausfallen.

## Revendications

1. Chemin de câbles et/ou tuyaux (1) pour porter des câbles et tuyaux et du type constitué d'un matériau de fil ayant des fils pliés en forme de U (4) définissant un fond (2) et des parois (3) du chemin de câbles et/ou tuyaux respectivement, et des fils longitudinaux fixés à celui-ci au fond et sur les parois, **caractérisé en ce que** le fond (2) du chemin est renforcé par des moyens du fond (2) comprenant au moins un fil plié en forme de zigzag (6).

2. Chemin de câbles et/ou tuyaux selon la revendication 1, **caractérisé en ce que** l'au moins un fil plié en forme de zigzag (6) est plié de façon à ce que les pliages (7) sont situés entre l'un des bords latéraux longitudinaux du fond et le fil longitudinal le plus proche au fond (2) du chemin de câbles.

3. Chemin de câbles et/ou tuyaux selon la revendication 1 ou 2, **caractérisé en ce que** les fils longitudinaux (5) au fond (2) du chemin de câbles sont pourvus sur la paroi extérieure des fils pliés en forme de U (4).

4. Chemin de câbles et/ou tuyaux selon la revendication 1 ou 2, **caractérisé en ce que** les fils longitudinaux (5) au fond (2) du chemin de câbles sont pourvus sur la paroi intérieure des fils pliés en forme de U (4).

5. Chemin de câbles et/ou tuyaux selon la revendication 3 ou 4, **caractérisé en ce que** l'au moins un fil plié en forme de zigzag (6) est fixé aux fils longitudinaux (5) sur la paroi opposée de ceux-ci par rapport aux fils pliés en forme de U (4).

6. Chemin de câbles et/ou de tuyaux selon l'une quelconque des revendications précédentes, **caractérisé en ce que** le fil plié en forme de zigzag (6) est fourni par rapport aux fils longitudinaux (5) de façon à ce qu'une ouverture (8) est réalisée entre les pliages (7',7") et le fil longitudinal (5',5") se trouvant le plus proche du pliage.

7. Chemin de câbles et/ou tuyaux selon l'une quelconque des revendications précédentes, **caractérisé en ce que** le chemin (1) est équipé de moyens de sécurité (10) assurant que les câbles et/ou tuyaux ne puissent pas tomber du chemin.
